# EUROPÄISCHE PATENTSCHRIFT

(11) **EP 2 855 199 B1**
(45) Veröffentlichungstag und Bekanntmachung des Hinweises auf die Patenterteilung: **10.08.2016**
(21) Anmeldenummer: 13721706.3
(22) Anmeldetag: 07.05.2013
(51) Int. Cl.: B60N 2/68

(54) **LEHNENTEIL FÜR EINEN SITZ, INSBESONDERE EINEN FAHRZEUGSITZ**
BACKREST FOR A SEAT, IN PARTICULAR VEHICLE SEAT
DOSSIER DE SIÈGE, NOTAMMENT SIÈGE DE VÉHICULE

(30) Priorität: 29.05.2012 DE 102012208993; 08.08.2012 DE 102012214039
(43) Veröffentlichungstag der Anmeldung: 08.04.2015
(73) Patentinhaber: Johnson Controls Components GmbH & Co. KG, 67657 Kaiserslautern (DE)
(72) Erfinder: NASSHAN, Jürgen, 67655 Kaiserslautern (DE); SCHEIB, Martin, 67744 Kappeln (DE)
(74) Vertreter: Finger, Catrin
(86) Internationale Anmeldenummer: PCT/EP2013/059443
(87) Internationale Veröffentlichungsnummer: WO 2013/178439

(56) Entgegenhaltungen:
- DE-A1-102006 004 466
- DE-A1-102006 004 467
- DE-A1-102008 020 289
- DE-T2- 60 202 686

## Beschreibung

Die Erfindung betrifft ein Lehnenteil für einen Sitz, insbesondere einen Fahrzeugsitz.

Ein Lehnenteil für einen Sitz, insbesondere für einen Fahrzeugsitz ist allgemein bekannt und weist üblicherweise ein lastaufnehmendes Tragwerk auf.

Die DE 10 2007 042 169 A1 beschreibt ein Strukturteil für einen Fahrzeugsitz, das mindestens aufweist: ein Grundblech, mindestens ein Rahmenprofil, vorzugsweise Hutprofil, zur Verstärkung des Strukturteils, wobei das Rahmenprofil mit dem Grundblech verbunden ist. Dabei ist vorgesehen, dass in dem Grundblech Ausnehmungen, insbesondere Langlöcher, ausgebildet sind und an dem Rahmenprofil Vorsprünge mit z. B. Zackenform ausgebildet sind, die durch die Ausnehmungen des Grundblechs gesetzt sind. Hierbei ist das Rahmenprofil mit dem Grundblech vorzugsweise in einer Schweißverbindung verbunden. Diese Schweißverbindung kann insbesondere eine Laserschweißverbindung sein, wodurch eine kostengünstige Verschweißung über eine große Schweißfläche ohne allzu aufwändige Positionierungsmaßnahmen möglich ist.

Die US 7 753 443 B2 beschreibt eine Rahmenstruktur für eine Sitzlehne.

Aus der DE 10 2008 020 289 A1 sind ein Strukturteil, ein Fahrzeugsitz mit einer Rückenlehne und ein Verfahren zur Herstellung eines Strukturteils oder einer Rückenlehne bekannt. Das Strukturteil weist wenigstens ein Plattenelement und ferner ein erstes Profilelement sowie ein zweites Profilelement auf. Das erste Profilelement und das zweite Profilelement sind sowohl miteinander als auch mit dem Plattenelement mittels jeweils wenigstens einer Schweißung verbunden. Das Plattenelement weist in einem ersten Verbindungsbereich mit dem ersten Profilelement erste Sicken und in einem zweiten Verbindungsbereich mit dem zweiten Profilelement zweite Sicken derart auf, dass ein Mindestabstand zwischen den ersten und zweiten Sicken vorgesehen ist.

Weitere Fahrzeugsitzstrukturen sind aus der DE 10 2010 005 652 A1, aus der DE 10 2006 004 466 A1, aus der DE 10 2006 004 467 A1, aus der DE 603 01 360 T2, aus der FR 2 924 073 A1, aus der

DE 10 2004 055 349 A1, aus der US 7,635,165 B2, aus der
DE 10 2005 043 084 A1, aus der DE 10 2006 005 751 A1 und aus der
DE 602 02 686 T2 bekannt.

Zudem werden in der DE 10 2006 038 785 A1 eine Metallstruktur für die Innenausstattung eines Kraftfahrzeugs, in der GB 477,665 ein Metallrahmen für Fenster, Türen und andere Zwecke und in der DE 103 29 017 A1 eine Tragekonstruktion für Karosserieaufbauten von Fahrzeugen aus rechteckigen Hohlprofilen beschrieben.

Ausgehend von diesem Stand der Technik ist es Aufgabe der vorliegenden Erfindung, ein gegenüber dem Stand der Technik verbessertes Lehnenteil für einen Sitz anzugeben, welches insbesondere eine verbesserte Lastaufnahme aufweist.

Hinsichtlich des Lehnenteils für einen Sitz wird die Aufgabe durch die im Anspruch 1 angegebenen Merkmale gelöst.

Vorteilhafte Weiterbildungen der Erfindung sind Gegenstand der Unteransprüche.

Das Lehnenteil für einen Sitz, insbesondere einen Fahrzeugsitz, umfasst zumindest ein Rückenblech und eine Mehrzahl von einzelnen Profilen, wobei das Rückenblech abschnittsweise in Richtung der Profile ragende Versickungen aufweist und in einem Bereich der Versickungen die Profile kraft- und/oder stoffschlüssig mit dem Rückenblech verbunden sind. In jeder Ecke des Rückenblechs ist ein Abschnitt mit einer Mehrzahl von Versickungen ausgebildet. Die Versickungen jedes Abschnitts sind jeweils parallel zueinander in einem vorgebbaren Abstand angeordnet.

Erfindungsgemäß erstrecken sich die Versickungen jedes Abschnitts jeweils diagonal zwischen den angrenzenden Kanten des Rückenblechs, wobei Versickungen einander angrenzender Abschnitte in einem Winkel zueinander verlaufen und wobei die Länge der parallel zueinander verlaufenden Versickungen im jeweiligen Abschnitt in Richtung der Ecken abnimmt.

Durch die Kombination von Rückenblech mit aussteifenden Versickungen und Profilen, welche abschnittsweise mit den Versickungen des Rückenblechs kraft- und/oder stoffschlüssig verbunden sind, ist ein einfach zu erstellendes, lastaufnehmendes Tragwerk für das Lehnenteil gegeben.

Da in jeder Ecke des Rückenblechs ein Abschnitt mit einer Mehrzahl von Versickungen ausgebildet ist, sind üblicherweise instabile Abschnitte des Rückenblechs wirkungsvoll versteift.

Durch die Anordnung der Versickungen eines Abschnitts parallel zueinander in einem vorgebbaren Abstand ist eine gleichmäßige Krafteinleitung und -verteilung bewirkt.

Da sich die Versickungen eines Abschnitts diagonal zwischen den angrenzenden Kanten des Rückenblechs erstrecken, ist eine besonders effiziente Einleitung und Verteilung der auftretenden Kräfte in das bzw. im Rückenblech ermöglicht.

In einer vorteilhaften Ausführungsform sind die Profile derart umlaufend am Rückenblech angeordnet, dass ein Profilrahmen ausgebildet ist. Ein solcher umlaufender Profilrahmen bewirkt eine zusätzliche Aussteifung des Lehnenteils und erhöht insbesondere eine Verwindungssteifigkeit.

In einer weiteren vorteilhaften Ausführungsform sind benachbarte Profile stirnseitig überlappend am Rückenblech angeordnet, so dass zwischen den entsprechenden Profilen eine formschlüssige Verbindung ausgebildet ist, welche eine Lastverteilung zwischen den Profilen verbessert.

In alternativen Ausführungsformen können die Profile einen offenen oder einen geschlossenen Querschnitt aufweisen. Dadurch ist eine Ausformung und eine Belastbarkeit der Profile variabel an die auftretenden Belastungen im Betrieb der Rückenlehne anpassbar.

Vorteilhafterweise sind die Versickungen trogartig oder kanalartig ausgebildet. Dies bewirkt in sich abgeschlossen ausgeformte Versickungen, welche das Rückenblech besonders wirkungsvoll aussteifen.

In alternativen Ausführungsformen ist ein Querschnitt der Versickungen trapezförmig, rechteckig, quadratisch, verrundet oder verrundet mit Abflachungen ausgebildet. Dies ermöglicht die Ausbildung besonders verwindungssteifer Versickungen.

In einer besonders vorteilhaften Ausführungsform ist im Bereich von zwei aneinander angrenzenden Profilen auf deren zu den abragenden Versickungen des Rückenblechs gegenüberliegenden Oberflächenseiten zumindest ein Knotenblech angeordnet und mit den jeweiligen Profilen form-, stoff- und/oder kraftschlüssig verbunden. Auf diese Weise ist zusätzlich zur Verbindung zwischen Rückenblech und jeweiligen Profil eine Kraftübertragung zwischen den mittels der Knotenbleche verbundenen Profile ermöglicht.

Anhand der beigefügten schematischen Figuren wird die Erfindung näher beschrieben.

Dabei zeigen:
- Fig. 1: schematisch in Draufsicht ein Lehnenteil, umfassend ein mit Versickungen versehenes Rückenblech und an diesem befestigte Profile eines Profilrahmens, und
- Fig. 2: schematisch in Draufsicht einen Ausschnitt eines Lehnenteils mit einem mit Versickungen versehenes Rückenblech und an diesem befestigte Profile und mit Knotenblechen an Verbindungsstellen von Profilen.

Einander entsprechende Teile sind in allen Figuren mit den gleichen Bezugszeichen versehen.

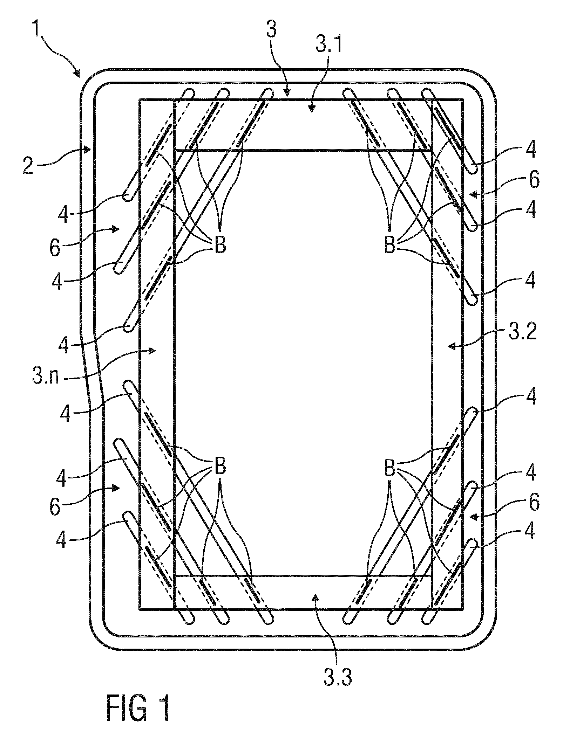

Die Figur 1 zeigt in Draufsicht ein Lehnenteil 1 für einen Sitz, insbesondere einen Fahrzeugsitz.

Das Lehnenteil 1 ist aus einem Rückenblech 2 und einem Profilrahmen 3 mit mehreren Profilen 3.1 bis 3.n gebildet. Die Profile 3.1 bis 3.n sind separate Teile, die untereinander nicht verbunden sind. Die Profile 3.1 bis 3.n weisen derartige, insbesondere unterschiedliche Längen- und Breitenabmessungen auf, dass diese im montierten Zustand den umlaufenden Profilrahmen 3 bilden.

Darüber hinaus können die Enden benachbarter Profile 3.1 und 3.2, 3.2 und 3.3, 3.3 und 3.4, 3.4 und 3.1 und somit die Profile 3.1 bis 3.4 stirnseitig einander teilweise überlappend am Rückenblech 2 und senkrecht zueinander angeordnet sein.

Die Profile 3.1 bis 3.n können offen oder geschlossen sein. Beispielsweise weisen die Profile 3.1 bis 3.n eine L-, U- oder C-Form mit oder ohne Abflachungen oder eine geschlossene Form auf. In der geschlossenen Form können die Profile 3.1 bis 3.n als Hohlprofile ausgebildet sein und eine runde, ovale, rechteckige oder quadratische Querschnittsform aufweisen. Die runde oder ovale Querschnittsform kann darüber hinaus mit Abflachungen versehen sein.

Bei einem im Wesentlichen rechteckigen Rückenblech 2 weisen, wie im Beispiel nach Figur 1 gezeigt, zwei jeweils einander gegenüberliegende Profile 3.1 und 3.3 bzw. 3.2 und 3.n zumindest die gleiche Länge auf. Darüber hinaus weisen die Profile 3.1 bis 3.n gleiche oder korrespondierende Formen, insbesondere Querschnittsformen auf.

Das Rückenblech 2 weist abschnittsweise Versickungen 4 auf, die in Richtung des Profilrahmens 3 ragen. Die Versickungen 4 sind trogartig oder kanalartig ausgebildet und weisen einen trapezförmigen, rechteckigen, quadratischen oder runden Querschnitt, wobei der runde Querschnitt alternativ Abflachungen aufweisen kann.

Darüber hinaus können die Versickungen 4 auf der dem Profilrahmen 3 gegenüberliegenden Oberflächenseite des Rückenbleches 2 offen oder geschlossen ausgebildet sein.

Dabei umfasst das Rückenblech 2 im dargestellten Ausführungsbeispiel vier Abschnitte 6, die in den Ecken des im Wesentlichen rechteckigen Rückenblechs 2 vorgesehen sind. Im jeweiligen Abschnitt 6 sind mehrere parallel zueinander in einem vorgebbaren Abstand verlaufende Versickungen 4 vorgesehen. Die Versickungen 4 eines Abschnitts 6 erstrecken sich diagonal zwischen den angrenzenden Kanten des Rückenblechs 2. Dadurch weisen die Versickungen 4 in einem Abschnitt 6 unterschiedliche Längen auf.

In einer Weiterbildung der Erfindung weisen alle Versickungen 4 in allen Abschnitten 6 des Rückenblechs 2 die gleiche Tiefe und/oder gleiche Querschnittsform auf. Alternativ können diese auch variieren.

Darüber hinaus verlaufen die Versickungen 4 von einander gegenüberliegenden Abschnitten 6 parallel zueinander. Versickungen 4 einander angrenzender Abschnitten 6 verlaufen in einem Winkel zueinander. Wie in Figur 1 dargestellt verlaufen die Versickungen 4 benachbarter Abschnitte 6 in einem stumpfen Winkel zueinander. Alternativ und nicht näher dargestellt können die Versickungen 4 benachbarter Abschnitte 6 senkrecht zueinander verlaufen. Ferner nimmt die Länge der parallel zueinander verlaufenden Versickungen 4 im jeweiligen Abschnitt 6 in Richtung der Ecken ab.

Zur Verbindung der Profile 3.1 bis 3.n mit einem lastaufnehmenden Tragwerk sind die Profile 3.1 bis 3.n im Bereich B der vom Rückenblech 2 abragenden Versickungen 4 kraft- und/oder stoffschlüssig mit dem Rückenblech 2 verbunden.

Mit länger werdender Versickung 4 vergrößert sich bedingt durch die diagonale Anordnung der Versickung 4 dabei auch ein Abstand zwischen den Bereichen B, in welchen die kraft- und/oder stoffschlüssige Verbindung zwischen Rückenblech 2 und Profil 3.1 bis 3.n ausgebildet ist.

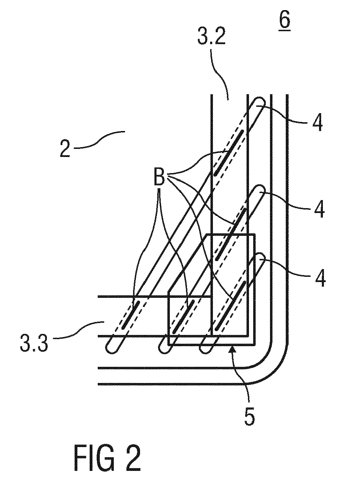

Darüber hinaus können, wie in Figur 2 dargestellt, die Profile 3.1 bis 3.n im Bereich von zwei aneinander angrenzenden Profilen 3.1 und 3.2, 3.2 und 3.3, 3.3 und 3.n und/oder 3.n und 3.1 zusätzlich auf deren zu den abragenden Versickungen 4 gegenüberliegenden Oberflächenseiten mit Knotenblechen 5 versehen und somit miteinander verbunden sein. Die Form der Knotenbleche 5 kann variabel sein.

### Bezugszeichenliste

- 1: Lehnenteil
- 2: Rückenblech
- 3: Profilrahmen
- 3.1 bis 3.n: Profile
- 4: Versickungen
- 5: Knotenblech
- 6: Abschnitt
- B: Bereich

## Patentansprüche

1. Lehnenteil (1) für einen Sitz, insbesondere einen Fahrzeugsitz, umfassend zumindest ein Rückenblech (2) und eine Mehrzahl von einzelnen Profilen (3.1 bis 3.n), wobei das Rückenblech (2) abschnittsweise in Richtung der Profile (3.1 bis 3.n) ragende Versickungen (4) aufweist und in einem Bereich (B) der Versickungen (4) die Profile (3.1 bis 3.n) kraft- und/oder stoffschlüssig mit dem Rückenblech (2) verbunden sind, wobei in jeder Ecke des Rückenblechs (2) ein Abschnitt (6) mit einer Mehrzahl von Versickungen (4) ausgebildet ist und wobei die Versickungen (4) jedes Abschnitts (6) jeweils parallel zueinander in einem vorgebbaren Abstand angeordnet sind,
**dadurch gekennzeichnet, dass** sich die Versickungen (4) jedes Abschnitts (6) jeweils diagonal zwischen den angrenzenden Kanten des Rückenblechs (2) erstrecken, wobei Versickungen (4) einander angrenzender Abschnitte (6) in einem Winkel zueinander verlaufen und wobei die Länge der parallel zueinander verlaufenden Versickungen (4) im jeweiligen Abschnitt (6) in Richtung der Ecken abnimmt.

2. Lehnenteil (1) nach Anspruch 1,
**dadurch gekennzeichnet, dass** die Profile (3.1 bis 3.n) derart umlaufend am Rückenblech (2) angeordnet sind, dass ein Profilrahmen (3) ausgebildet ist.

3. Lehnenteil (1) nach Anspruch 1 oder 2,
**dadurch gekennzeichnet, dass** benachbarte Profile (3.1 bis 3.n) stirnseitig überlappend am Rückenblech (2) angeordnet sind.

4. Lehnenteil (1) nach einem der vorherigen Ansprüche,
**dadurch gekennzeichnet, dass** die Profile (3.1 bis 3.n) einen offenen oder einen geschlossenen Querschnitt aufweisen.

5. Lehnenteil (1) nach einem der vorherigen Ansprüche,
**dadurch gekennzeichnet, dass** die Versickungen (4) trogartig oder kanalartig ausgebildet sind.

6. Lehnenteil (1) nach Anspruch 5,
**dadurch gekennzeichnet, dass** ein Querschnitt der Versickungen (4) trapezförmig, rechteckig, quadratisch, verrundet oder verrundet mit Abflachungen ausgebildet ist.

7. Lehnenteil (1) nach einem der vorherigen Ansprüche,
**dadurch gekennzeichnet, dass** im Bereich von zwei aneinander angrenzenden Profilen (3.1 bis 3.n) auf deren zu den abragenden Versickungen (4) des Rückenblechs (2) gegenüberliegenden Oberflächenseiten zumindest ein Knotenblech (5) angeordnet ist und mit den jeweiligen Profilen (3.1 bis 3.n) form-, stoff- und/oder kraftschlüssig verbunden ist.

## Claims

1. A backrest part (1) for a seat, in particular a vehicle seat, comprising at least one back plate (2) and a plurality of individual profiles (3.1 to 3.n), wherein the back plate (2) has beadings (4) protruding in sections in the direction of the profiles (3.1 to 3.n), and the profiles (3.1 to 3.n) are connected in a frictional and/or integrally bonded manner to the back plate (2) in a region (B) of the beadings (4), wherein a section (6) having a plurality of beadings (4) is formed in each corner of the back plate (2), and wherein the beadings (4) of each section (6) are in each case arranged parallel to each other at a predetermined distance, **characterized in that** the beadings (4) of each section (6) in each case extend diagonally between the adjacent edges of the back plate (2), wherein beadings (4) of mutually adjacent sections (6) run at an angle to one another, and wherein the length of the beadings (4) running parallel to one another decreases in the respective section (6) in the direction of the corners.

2. The backrest part (1) as claimed in claim 1, **characterized in that** the profiles (3.1 to 3.n) are arranged in an encircling manner on the back plate (2) such that a profile frame (3) is formed.

3. The backrest part (1) as claimed in claim 1 or 2, **characterized in that** adjacent profiles (3.1 to 3.n) are arranged on the back plate (2) in a manner overlapping on the end side.

4. The backrest part (1) as claimed in one of the preceding claims, **characterized in that** the profiles (3.1 to 3.n) have an open or a closed cross section.

5. The backrest part (1) as claimed in one of the preceding claims, **characterized in that** the beadings (4) are of trough-like or channel-like design.

6. The backrest part (1) as claimed in claim 5, **characterized in that** a cross section of the beadings (4) is of trapezoidal, rectangular, square or rounded design or of rounded design with flattened portions.

7. The backrest part (1) as claimed in one of the preceding claims, **characterized in that** at least one junction plate (5) is arranged in the region of two mutually adjacent profiles (3.1 to 3.n) on the surface sides thereof opposite the protruding beadings (4) of the back plate (2) and is connected to the respective profiles (3.1 to 3.n) in a form-fitting, integrally bonded and/or frictional manner.

## Revendications

1. Partie de dossier (1) pour un siège, en particulier un siège de véhicule, comprenant au moins une tôle arrière (2) et une pluralité de profilés individuels (3.1 à 3.n), la tôle arrière (2) présentant des moulures (4) saillant en partie dans la direction des profilés (3.1 à 3.n) et les profilés (3.1 à 3.n) étant connectés par engagement par correspondance de force et/ou par liaison de matière à la tôle arrière (2) dans une région (B) des moulures (4), une portion (6) avec une pluralité de moulures (4) étant réalisée dans chaque coin de la tôle arrière (2) et les moulures (4) de chaque portion (6) étant disposées à chaque fois parallèlement les unes aux autres à une distance prédéfinissable,
**caractérisée en ce que** les moulures (4) de chaque portion (6) s'étendent à chaque fois en diagonale entre les arêtes adjacentes de la tôle arrière (2), les moulures (4) de portions adjacentes les unes aux autres (6) s'étendant suivant un certain angles les unes par rapport aux autres et la longueur des moulures (4) s'étendant parallèlement les unes aux autres diminuant dans la direction des coins dans chaque portion (6).

2. Partie de dossier (1) selon la revendication 1,
**caractérisée en ce que** les profilés (3.1 à 3.n) sont disposés sur la périphérie de la tôle arrière (2), de telle sorte qu'un cadre profilé (3) soit réalisé.

3. Partie de dossier (1) selon la revendication 1 ou 2,
**caractérisée en ce que** des profilés adjacents (3.1 à 3.n) sont disposés de manière à se chevaucher du côté frontal au niveau de la tôle arrière (2).

4. Partie de dossier (1) selon l'une quelconque des revendications précédentes,
**caractérisée en ce que** les profilés (3.1 à 3.n) présentent une section transversale ouverte ou une section transversale fermée.

5. Partie de dossier (1) selon l'une quelconque des revendications précédentes,
**caractérisée en ce que** les moulures (4) sont réalisées en forme d'auge ou de canal.

6. Partie de dossier (1) selon la revendication 5,
**caractérisée en ce qu'**une section transversale des moulures (4) est réalisée sous forme trapézoïdale, rectangulaire, quadrilatérale, arrondie ou arrondie avec des méplats.

7. Partie de dossier (1) selon l'une quelconque des revendications précédentes,
**caractérisée en ce que** dans la région de deux profilés adjacents l'un à l'autre (3.1 à 3.n) au niveau de leurs côtés de surface opposés aux moulures saillantes (4) de la tôle arrière (2), est disposée au moins une tôle de jonction (5) qui est connectée aux profilés respectifs (3.1 à 3.n) par engagement par correspondance de formes, par liaison de matière et/ou par force.
